# EUROPÄISCHE PATENTSCHRIFT

(11) **EP 1 737 686 B1**
(45) Veröffentlichungstag und Bekanntmachung des Hinweises auf die Patenterteilung: **12.03.2008**
(21) Anmeldenummer: 05733724.8
(22) Anmeldetag: 15.04.2005
(51) Int. Cl.: B60H 1/00

(54) **HEIZ- UND KLIMATISIERUNGSSYSTEM FÜR EIN KRAFTFAHRZEUG**
HEATING AND AIR-CONDITIONING SYSTEM FOR A MOTOR VEHICLE
DISPOSITIF DE CHAUFFAGE ET DE CLIMATISATION DESTINE A UN VEHICULE

(30) Priorität: 22.04.2004 DE 102004019607
(43) Veröffentlichungstag der Anmeldung: 03.01.2007
(73) Patentinhaber: Webasto AG, 82131 Stockdorf (DE)
(72) Erfinder: KHELIFA, Noureddine, 80637 München (DE); KRÄMER, Wolfgang, 81479 München (DE)
(74) Vertreter: Willsau, Peter
(86) Internationale Anmeldenummer: PCT/EP2005/003973
(87) Internationale Veröffentlichungsnummer: WO 2005/102746

(56) Entgegenhaltungen:
- DE-C1- 10 156 310
- US-A- 4 401 013
- US-A- 5 333 678

## Beschreibung

Die Erfindung betrifft ein Heiz- und Klimatisierungssystem für ein Kraftfahrzeug, insbesondere ein Nutzkraftfahrzeug, zum Heizen und Kühlen eines Kraftfahrzeuginnenraums während der Fahrt und im Stand des Kraftfahrzeugs, wobei der Kraftfahrzeuginnenraum in einen Frontbereich und einen Heckbereich unterteilt ist, die separat heizbar und kühlbar sind, mit einer Frontanlage zum Heizen und Kühlen des Frontbereiches während der Fahrt des Kraftfahrzeugs, einer Heckanlage zum Heizen und Kühlen des Heckbereichs während der Fahrt des Kraftfahrzeugs und einer Standanlage, um mit dieser zumindest den Heckbereich im Stand des Kraftfahrzeugs zu Heizen und zu Kühlen.

Die Erfindung betrifft weiterhin ein Verfahren zum Heizen und Klimatisieren eines Kraftfahrzeugs.

Weiterhin bezieht sich die Erfindung auf ein Kraftfahrzeug mit einem Heiz- und Klimatisierungssystem.

Bei Nutzkraftfahrzeugen, insbesondere den Zugfahrzeugen von Lästkraftwagen, sind besondere Anforderungen an die Beheizung und Kühlung, das heißt im Allgemeinen die Klimatisierung des Fahrzeuginnenraums gestellt. Der Fahrzeuginnenraum ist im Allgemeinen in einen Frontbereich und einen Heckbereich unterteilt, wobei der Frontbereich Fahrer- und Beifahrersitze enthält, die während der Fahrt des Fahrzeugs besetzt sind, und der Heckbereich eine Schlafkabine aufweist, die im Allgemeinen im Stand des Fahrzeugs benutzt wird. Um dem Fahrer während der Ruhepausen, in welchen er sich in der Schlafkabine befindet, ein angenehmes Klima zur Verfügung zu stellen, ist es nützlich, zumindest den Heckbereich im Stand des Fahrzeugs heizen beziehungsweise kühlen zu können.

Zu diesem Zweck sehen Konzepte des Standes der Technik vor, die Frontanlage mit der Heckanlage zu kombinieren und insbesondere zur Kühlung des Heckbereichs im Stand des Fahrzeugs den gemeinsamen Kompressor der Klimaanlage auch im Stand zu betreiben. Nachteilig an diesem Konzept sind der hohe Kraftstoffverbrauch, der Verschleiß des Motors im Stand des Fahrzeugs sowie die zusätzlichen Emissionen, zum Beispiel Schadstoffe und Lärm aufgrund des Betriebs des Verbrennungsmotors.

Diesen Nachteilen wurde bereits teilweise begegnet, indem die Frontanlage und die Heckanlage ausschließlich während der Fahrt des Fahrzeugs betreibbar sind und indem eine zusätzliche autarke Standklimaanlage vorgesehen wurde. Die Standanlange arbeitet zum Beispiel mit einem zusätzlichen elektrisch oder mechanisch betreibbaren. Kompressor, der über einen Zusatzmotor oder eine Zusatzbatterie mit Energie versorgt wird. Dieses Konzept erniedrigt zwar den Kraftstoffverbrauch, es bewirkt einen geringeren Verschleiß, und es hat geringere Emissionen zur Folge, es besteht allerdings der Nachteil, dass aufgrund der autarken Standklimaanlage ein erheblicher Aufwand erforderlich ist. Die US-A-5333678 offenbart eine derartige Anlage und offenbart die Merkmale des Oberbegriffs des Anspruchs 1.

Im Rahmen der vorliegenden Offenbarung werden Betriebszustände des Kraftfahrzeugs durch die Begriffe "Fahrt" und "Stand" gekennzeichnet. In diesem Zusammenhang ist zu beachten, dass mit "Fahrt" gekennzeichnete Betriebszustände nicht unbedingt eine Bewegung des Fahrzeugs erfordern. Vielmehr ist ausreichend, dass das energieliefernde Aggregat, das heißt im Allgemeinen der Verbrennungsmotor des Fahrzeugs, in Betrieb ist.

Der Erfindung liegt die Aufgabe zugrunde, ein Heiz- und Klimatisierungssystem zur Verfügung zu stellen, das einen möglichst rationellen Aufbau aufweist.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Heiz- und Klimatisierungssystem dadurch auf, dass die Standanlage in die Heckanlage integriert ist. Hierdurch ist der Gesamtaufbau des Systems rationalisiert, da die Standanlage und die Heckanlage gemeinsame Komponenten aufweisen können.

Insbesondere ist vorgesehen, dass die Standanlage einen Kühlwärmetauscher und einen Kältespeicher aufweist und dass der Kühlwärmetauscher, ein Heizwärmetauscher der Heckanlage und ein Verdampfer der Heckanlage von demselben Gebläse mit einem Luftstrom beaufschlagbar sind. Der Kältespeicher der Standanlage wird während der Fahrt des Kraftfahrzeugs durch einen Verdampfungsprozess im Bereich des Kältespeichers geladen. Die Integration der Standanlage in die Heckanlage ist in diesem Fall dadurch realisiert, dass ein mit dem Kältespeicher kommunizierender Kühlwärmetauscher von demselben Gebläse mit Luft beaufschlagbar ist, wie der Verdampfer und der Heizwärmetauscher der Heckanlage.

Bei dieser Lösung ist es weiterhin von besonderem Vorteil, dass der Kühlwärmetauscher der Standanlage und der Kältespeicher der Standanlage in einem Wärmeträgerkreislauf angeordnet sind, durch den ein Wärmeträger mittels einer Pumpe gefördert wird. Das Wärmeträgermedium kann somit im Kältespeicher gespeicherte Kälte diesem entnehmen und durch die Energie einer elektrisch angetriebenen Pumpe das gekühlte Wärmeträgermedium zum Kühlwärmetauscher transportieren. Dort wird es mit Gebläseluft beaufschlagt, die dann gekühlt in den Heckbereich des Fahrzeugs strömen kann.

Weiterhin ist es besonders nützlich, dass ein Verdampfer der Frontanlage, ein Verdampfer der Heckanlage und ein Kältespeicher der Standanlage mit demselben Kondensator kommunizieren und dass ein Kompressor für das gesamte Heiz- und Klimatisierungssystem vorgesehen ist. Es reicht also aus, einen einzigen Kondensator und einen einzigen Kompressor für den Betrieb des Gesamtsystems vorzusehen. Das in dem Kondensator verflüssigte Kältemittel kann ventilgesteuert sowohl den Verdampfer der Frontanlage als auch den Verdampfer der Heckanlage als auch den Kältespeicher der Standanlage erreichen. Von diesen Komponenten gelangt das Kältemittel dann zurück zum einzigen Kompressor der Anlage.

Es ist aber auch möglich, dass ein Verdampfer der Frontanlage und ein Verdampfer der Heckanlage mit demselben Kondensator kommunizieren und dass die Standanlage einen eigenen Kondensator und einen eigenen Kompressor aufweist. Hierdurch ist zwar im Vergleich mit der Ausführungsform mit nur einem Kompressor und nur einem Kondensator der aparative Aufwand vergrößert, es liegt hier jedoch ein Gewinn an Flexibilität bei der Integration der Standklimaanlage vor. Durch die Ausstattung der Standklimaanlage mit einem separaten Kondensator und einem separaten Kompressor kann diese separat mit Kältemittel befüllt dem Gesamtsystem zugefügt werden.

Weiterhin kann vorgesehen sein, dass ein Verdampfer der Heckanlage und ein Kältespeicher der Standanlage mit demselben Kondensator kommunizieren und dass die Frontanlage einen eigenen Kondensator und einen eigenen Kompressor aufweist. Damit ist die Frontanlage von der kombinierten Heck-Standklimaanlage entkoppelt. Die Frontanlage wird somit entlastet, es sind keine langen Kältemittelleitungen zwischen Frontbereich und Heckbereich erforderlich, und die Heck-Standklimaanlage kann flexibel ohne Berücksichtigung der Frontanlage integriert werden. Der Kompressor der kombinierten Heck-Standanlage kann dabei mechanisch oder elektrisch angetrieben werden. Im Stand des Kraftfahrzeugs ist im Allgemeinen kein Betrieb des Kompressors erforderlich, da der Kältespeicher die für die Standklimatisierung erforderliche Kälte zur Verfügung stellt.

Es kann aber auch nützlich sein, dass die Heckanlage und die Standanlage einen gemeinsamen im Stand betreibbaren Kompressor aufweisen. Bei dieser Ausführungsform ist ein Kältespeicher entbehrlich. Der Kompressor kann im Stand mechanisch oder elektrisch betrieben werden. Die hierfür erforderliche Energie kann beispielsweise einer ausreichend geladenen Zusatzbatterie oder einer Brennstoffzelle entnommen werden.

Die Erfindung ist ferner in besonders vorteilhafter Weise dadurch weitergebildet, dass die Standanlage einen Kältespeicher aufweist und dass die Standanlage und die Heckanlage einen gemeinsamen Kühlwärmetauscher aufweisen, der mit dem Kältespeicher über eine Pumpe kommuniziert. Auf diese Weise ist ein der Heckanlage zugeordneter separater Verdampfer für die Fahrtklimatisierung entbehrlich. Vielmehr findet auch während der Fahrt eine Klimatisierung des Heckbereichs unter Vermittlung durch den Kältespeicher statt.

Weiterhin kann vorgesehen sein, dass die Standanlage und die Heckanlage eine gemeinsame Speicher-Verdampfer-Wärmetauscher-Einheit aufweisen. Der Kältespeicher dient somit zum Speichern von Kälte, als mit Gebläseluft beaufschlagter Wärmetauscher im Standbetrieb und als mit Gebläseluft beaufschlagter Wärmetauscher im Fahrbetrieb.

Die Erfindung betrifft weiterhin ein Verfahren zum Heizen und Klimatisieren eines Kraftfahrzeugs mit einem erfindungsgemäßen Heiz- und Klimatisierungssystem sowie ein Kraftfahrzeug mit einem erfindungsgemäßen Heiz- und Klimatisierungssystem. Auf diese Weise werden die Vorteile und Besonderheiten des erfindungsgemäßen Heiz- und Klimatisierungssystems auch im Rahmen eines Verfahrens und eines Kraftfahrzeugs umgesetzt.

Der Erfindung liegt die Erkenntnis zugrunde, dass durch die Integration der Standanlage in die Heckanlage zusätzliche Rationalisierungsmöglichkeiten im Hinblick auf das Gesamtsystem geschaffen werden. Weiterhin bietet diese Integration die Voraussetzung, um im Vergleich zu Systemen des Standes der Technik den Energieverbrauch und Emissionen zu senken und den Verschleiß der beteiligten Komponenten zu verringern.

Die Erfindung wird nun mit Bezug auf die begleitenden Zeichnung anhand besonders bevorzugter Ausführungsformen beispielhaft erläutert.

Dabei zeigt:
- Figur 1: eine schematische Darstellung einer ersten Ausführungsform eines erfindungsgemäßen Heiz- und Klimatisierungssystems;
- Figur 2: zwei Darstellungen zur Verdeutlichung möglicher geometrischer Anordnungen von Komponenten eines erfindungsgemäßen Heiz- und Klimatisierungssystems;
- Figur 3: eine schematische Darstellung einer zweiten Ausführungsform eines erfindungsgemäßen Heiz- und Klimatisierungssystems;
- Figur 4: eine schematische Darstellung einer dritten Ausführungsform eines erfindungsgemäßen Heiz- und Klimatisierungssystems;
- Figur 5: eine schematische Darstellung einer vierten Ausführungsform eines erfindungsgemäßen Heiz- und Klimatisierungssystems;
- Figur 6: eine schematische Darstellung einer fünften Ausführungsform eines erfindungsgemäßen Heiz- und Klimatisierungssystems;
- Figur 7: eine schematische Darstellung einer sechsten Ausführungsform eines erfindungsgemäßen Heiz- und Klimatisierungssystems;
- Figur 8: eine schematische Darstellung einer siebten Ausführungsform eines erfindungsgemäßen Heiz- und Klimatisierungssystems;
- Figur 9: eine schematische Darstellung einer achten Ausführungsform eines erfindungsgemäßen Heiz- und Klimatisierungssystems;
- Figur 10: eine schematische Darstellung einer neunten Ausführungsform eines erfindungsgemäßen Heiz- und Klimatisierungssystems; und
- Figur 11: eine schematische Darstellung einer zehnten Ausführungsform eines erfindungsgemäßen Heiz- und Klimatisierungssystems;

Bei der Nachfolgenden Beschreibung der bevorzugten Ausführungsform der vorliegenden Erfindung bezeichnen gleiche Bezugszeichen (modulo 100) gleiche oder vergleichbare Komponenten.

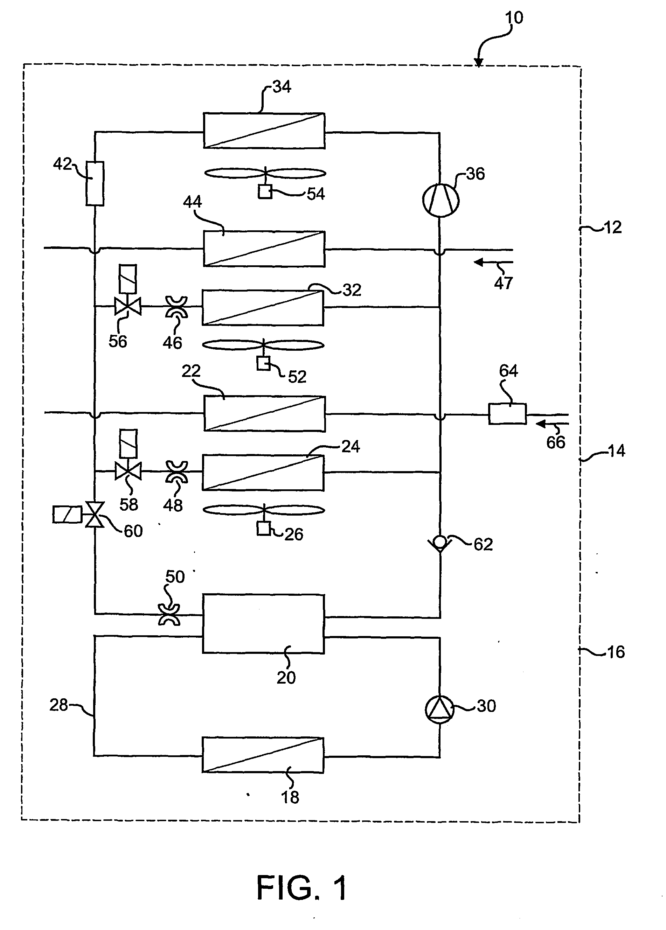

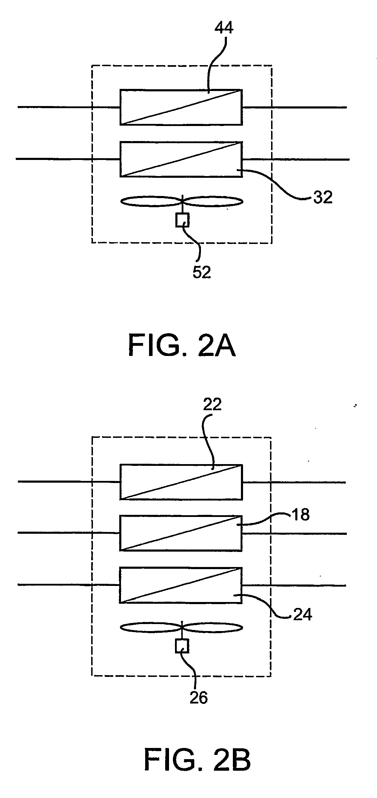

Figur 1 zeigt eine schematische Darstellung einer ersten Ausführungsform eines erfindungsgemäßen Heiz- und Klimatisierungssystems. Figur 2 zeigt zwei Darstellungen zur Verdeutlichung möglicher geometrischer Anordnungen von Komponenten eines erfindungsgemäßen Heiz- und Klimatisierungssystems. Das Heiz- und Klimatisierungssystem 10 umfasst eine Frontanlage 12, eine Heckanlage 14 und eine Standanlage 16, wobei die genannten Anlagen miteinander kombiniert sind. Dies äußert sich insbesondere darin, dass ein gemeinsamer Kompressor 36, ein gemeinsamer Kondensator 34 und ein gemeinsamer Sammler 42 sowohl mit dem Verdampfer 32 der Frontanlage 12, dem Verdampfer 24 der Heckanlage 14 und dem Kältespeicher 20 der Standanlage 16 kommunizieren und dass, wie in Figur 2 dargestellt, der Heizwärmetauscher 22 der Heckanlage 14, der Kühlwärmetauscher 18 der Standanlage 16 und der als Kühlwärmetauscher der Heckanlage 14 wirkende Verdampfer 24 der Heckanlage 14 von demselben Gebläse 26 mit einem Luftstrom beaufschlagt werden. Das Heiz- und Klimatisierungssystem 10 umfasst neben den bereits erwähnten Komponenten einen Heizwärmetauscher 44 für die Frontanlage 12, dem Kühlwasser 47 zuführbar ist, ein dem Verdampfer 32 der Frontanlage 12 zugeordnetes Expansionsorgan 46, ein dem Verdampfer 24 der Heckanlage 14 zugeordnetes Expansionsorgan 48 und ein dem Kältespeicher 20 zugeordnetes Expansionsorgan 50. Neben dem bereits erwähnten Gebläse 26 ist ein weiteres Gebläse 52 vorgesehen, das den Verdampfer 32 der Frontanlage 12 und den Heizwärmetauscher 44 der Frontanlage 12 mit einem Luftstrom beaufschlagen kann. Weiterhin ist ein Gebläse 54 vorgesehen, um dem Kondensator 34 einen Luftstrom zuzuführen. Es sind ferner elektrisch betätigbare Magnetventile 56, 58, 60 vorgesehen. Im geöffneten Zustand des Magnetventils 56 wird dem Verdampfer 32 der Frontanlage 12 Kältemittel zugeführt, während dies im geschlossenen Zustand des Magnetventils 56 unterbunden wird. Im geöffneten Zustand des Magnetventils 58 wird dem Verdampfer 24 der Heckanlage 14 Kältemittel zugeführt, während dies im geschlossenen Zustand des Magnetventils 58 unterbunden wird. Im geöffneten Zustand des Magnetventils 60 wird dem Kältespeicher 20 Kältemittel zugeführt, während dies im geschlossenen Zustand des Magnetventils 60 unterbunden wird. Es ist weiterhin ein Rückschlagventil 62 vorgesehen, welches ein Rückströmen von Kältemittel in Richtung des Kältespeichers 20 verhindert. Der Kältespeicher 20 und der Kühlwärmetauscher 18 sind über einen Wärmeträgerkreislauf 28 miteinander verbunden, wobei eine Pumpe 30 zur Förderung des Wärmeträgermediums durch die Komponenten vorgesehen ist. Es ist weiterhin eine Wasserheizung 64 vorgesehen, die geeignet ist, einem Heizwärmetauscher 22 der Heckanlage 14 zuströmendes Kühlwasser 66 zu erwärmen, um so einen Standheizbetrieb zu ermöglichen.

Im Fahrbetrieb wird der Kompressor 36 durch den Verbrennungsmotor des Kraftfahrzeugs angetrieben, so dass dem Kondensator 34 verdichtetes Kältemittel zugeführt wird. Dieses wird dann über den Sammler 42 in Abhängigkeit der Zustände der Magnetventile 56, 58, 60 den Verdampfern 32, 24 von Frontanlage 12 und Heckanlage 14 sowie dem Kältespeicher 20 zugeführt. Insbesondere kann auf diese Weise bei geöffnetem Magnetventil 60 der Kältespeicher 20 geladen werden. Im Stand des Fahrzeugs, das heißt bei ruhendem Verbrennungsmotor, kann dem Kältespeicher 20 die Kälteenergie dann durch Betreiben der Pumpe 30 entzogen werden. Über den Kühlwärmetauscher 18 kann unter Beaufschlagung desselben durch einen Luftstrom 26 (siehe Figur 2) diese Kälteenergie in Form eines gekühlten Luftstroms dem Heckbereich des Fahrzeugs zugeführt werden.

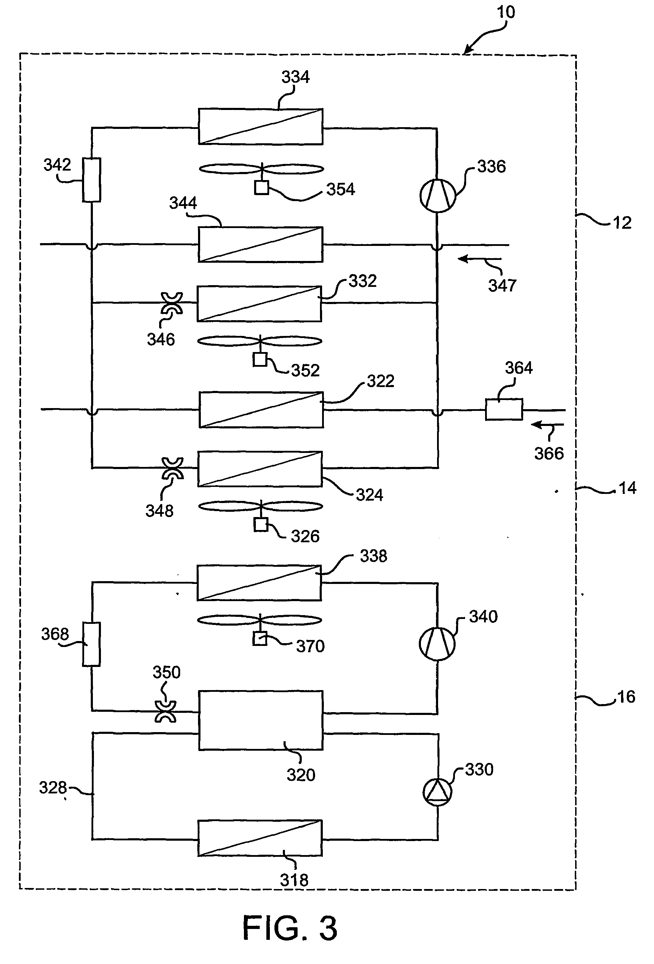

Figur 3 zeigt eine schematische Darstellung einer zweiten Ausführungsform eines erfindungsgemäßen Heiz- und Klimatisierungssystems. Bei dieser Ausführungsform des erfindungsgemäßen Heiz- und Klimatisierungssystems 10 sind die Frontanlage 12 und die Heckanlage 14 insbesondere im Hinblick auf den Fahrbetrieb in vergleichbarer Weise ausgestaltet, wie das Heiz- und Klimatisierungssystem 10 gemäß Figur 1. Es sind lediglich keine Ventile vorgesehen, um einen selektiven Betrieb von Frontanlage 12 und Heckanlage 14 während der Fahrt zu ermöglichen. Selbstverständlich ist dies aber möglich, indem den Expansionsorganen 346 und 348 jeweils ein Magnetventil vorgeschaltet wird.

Die Standanlage 16 ist in anderer Weise in das Heiz- und Klimatisierungssystem 10 eingebunden, als dies in Verbindung mit Figur 1 beschrieben wurde. Die Standanlage umfasst einen zusätzlichen Kompressor 340, wobei dieser vorzugsweise elektrisch antreibbar ist, beispielsweise durch die elektrische Energie direkt von einem Generator oder aus einer Batterie, vorzugsweise einer Zusatzbatterie, oder durch die elektrische Energie einer Brennstoffzelle. Verdichtetes Kühlmedium wird einem zusätzlichen Kondensator 338 zugeführt, der durch ein zusätzliches Gebläse 370 gekühlt wird. Das verdichtete Kühlmedium wird dann über einen zusätzlichen Sammler 348 und ein Expansionsorgan 350 dem Kältespeicher 320 zugeführt. Der so stattfindende Ladevorgang des Kältespeichers 320 findet vorzugsweise während der Fahrt des Fahrzeugs statt, da dann ausreichende Energie für den Betrieb des Kompressors 340 zur Verfügung steht. Es ist aber auch möglich, einen Ladevorgang im Stand des Fahrzeugs durchzuführen, falls eine ausreichende Menge an elektrischer Energie zur Verfügung steht. Das Entladen des Kältespeichers 320 erfolgt dann wie in dem Ausführungsbeispiel gemäß Figur 1.

Auch bei dem vorliegenden Ausführungsbeispiel gemäß Figur 3 zeichnet sich die Integration der Standanlage 16 in die Heckanlage 14 insbesondere dadurch aus, dass die Komponenten Heizwärmetauscher 322 der Heckanlage 14, Kühlwärmetauscher 318 der Standanlage 16 und Verdampfer 324 der Heckanlage 14 von einem gemeinsamen Gebläse 326 mit einem Luftstrom beaufschlagt werden, wie dies im Zusammenhang mit Figur 2 dargestellt ist.

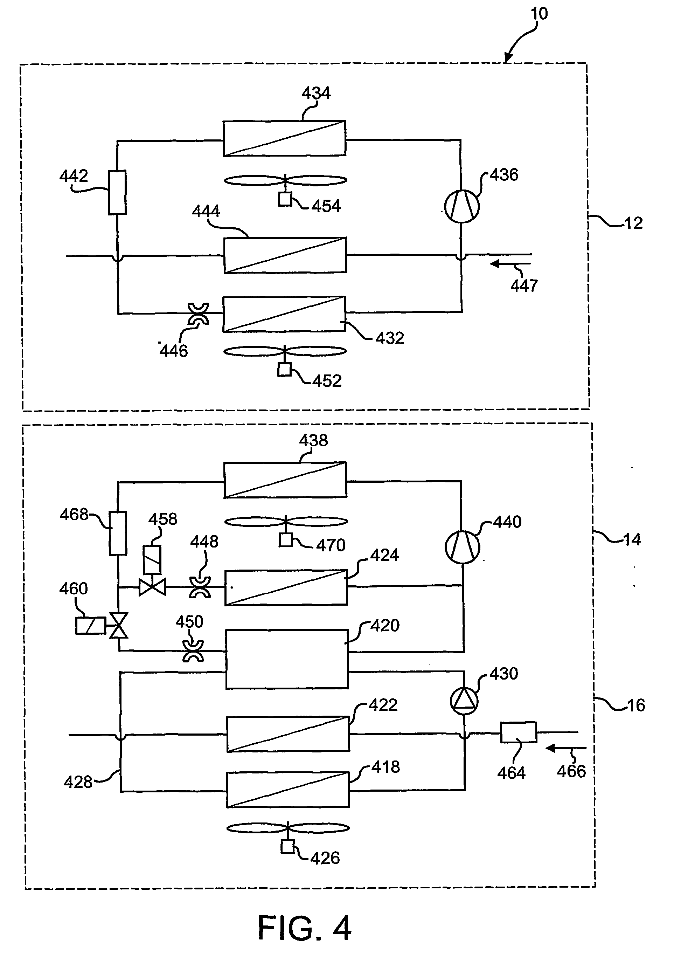

Figur 4 zeigt eine schematische Darstellung einer dritten Ausführungsform eines erfindungsgemäßen Heiz- und Klimatisierungssystems. Bei dem hier dargestellten Ausführungsbeispiel des Heiz- und Klimatisierungssystems 10 sind ein Kompressor 436 und ein Kondensator 434 für den Betrieb der Frontanlage 12 und ein Kompressor 440 sowie ein Kondensator 438 für den Betrieb der Heckanlage 14 und den Betrieb der Standanlage 16 vorgesehen. Die Frontanlage 12 und die Kombination aus Heckanlage 14 und Standanlage 16 sind somit vollständig entkoppelt. Der insbesondere elektrisch betriebene Kompressor 440 arbeitet vorzugsweise im Fahrbetrieb, um dann über den Verdampfer 424 eine Fahrklimatisierung des Heckbereichs zur Verfügung zu stellen und um den Kältespeicher 420 zu laden. Eine Entladung erfolgt dann wieder über den Wärmeträgerkreislauf 428 durch Betreiben der Pumpe 430. Wiederum ist zu bemerken, wie auch bereits im Zusammenhang mit Figur 3 erwähnt, dass ein Betrieb des Kompressors 440 durchaus auch im Standbetrieb in Frage kommt. Dann ist eine direkte Kühlung des Heckbereichs über den Verdampfer 424 bei geöffnetem Magnetventil 458 möglich und/oder eine Aufladung des Kältespeichers 420 bei geöffnetem Magnetventil 460, um diese Kälteenergie dann später dem Kältespeicher 420 entnehmen zu können. Wiederum werden, wie in Figur 2 dargestellt, der Heizwärmetauscher 422, der Kühlwärmetauscher 418 und der Verdampfer 424 von demselben Gebläse 426 mit einem Luftstrom beaufschlagt.

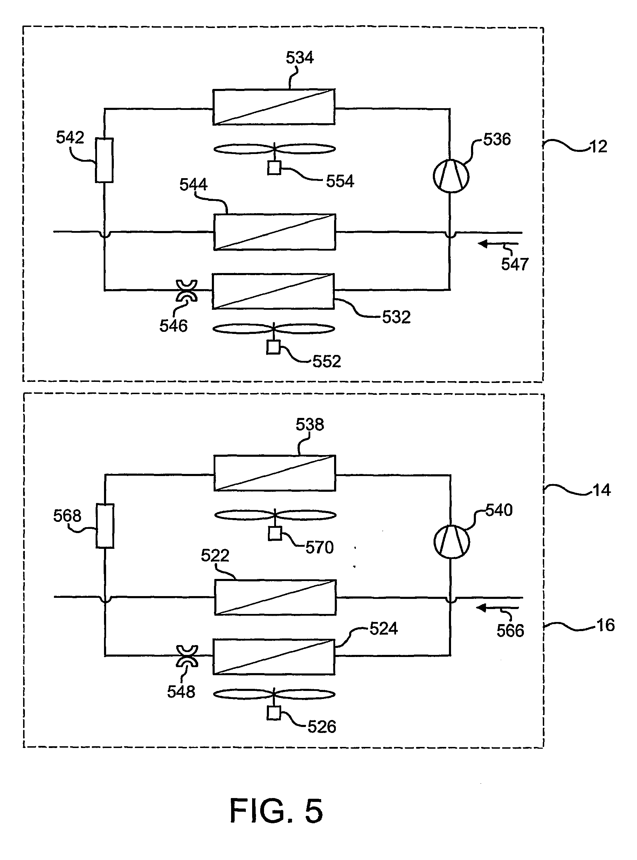

Figur 5 zeigt eine schematische Darstellung einer vierten Ausführungsform eines erfindungsgemäßen Heiz- und Klimatisierungssystems. Auch hier liegt eine vollständige Entkopplung von Frontanlage 12 einerseits und der Kombination aus Heckanlage 14 und Standanlage 16 andererseits vor. Die Frontanlage 12 entspricht derjenigen aus Figur 5. Die Kombination aus Heckanlage 14 und Standanlage 16 umfasst im Gegensatz zu der Lösung gemäß Figur 4 keinen Kältespeicher. Daher muss auch bei der Standklimatisierung der Kompressor 540 betrieben werden, um so im Verdampfer 524 Kälte erzeugen zu können. Daher empfiehlt es sich, als Kompressor 540 einen elektrisch oder mechanisch durch einen Zusatzmotor antreibbaren Kompressor zu verwenden, da dieser im Stand des Fahrzeugs durch eine Batterie, insbesondere eine Zusatzbatterie oder durch die elektrische Energie aus einer Brennstoffzelle betrieben werden kann. Dem Heizwärmetauscher 522 wird, wie beispielsweise gemäß Figur 4, Kühlwasser 566 zugeführt, wobei dies auch hier zum Zwecke des Heizens im Standbetrieb über, eine Wasserheizung erfolgen kann.

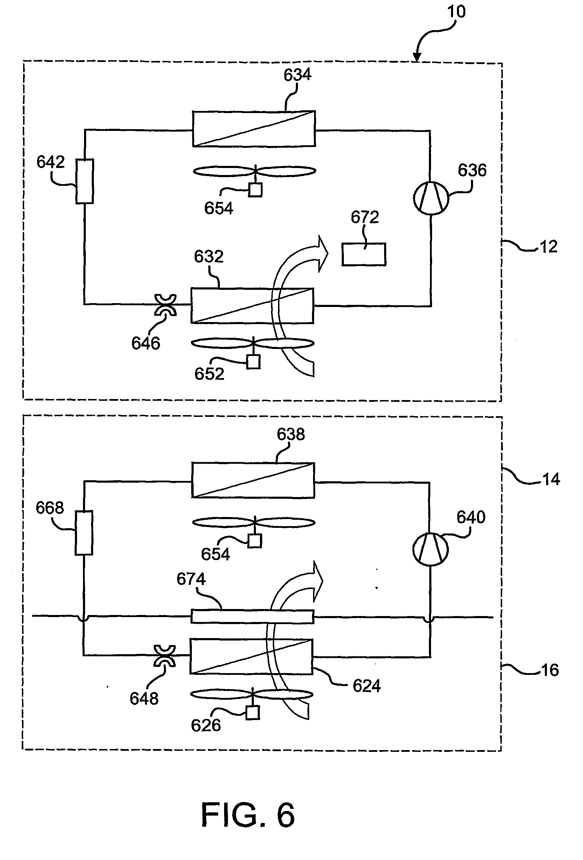

Figur 6 zeigt eine schematische Darstellung einer fünften Ausführungsform eines erfindungsgemäßen Heiz- und Klimatisierungssystems. Das vorliegende Beispiel des erfindungsgemäßen Heiz- und Klimatisierungssystems 10 entspricht in weiten Teilen demjenigen, das in Verbindung mit Figur 5 beschrieben wurde. Lediglich im Bezug auf die Heizeinrichtungen der Frontanlage 12 und der Kombination aus Heckanlage 14 und Standanlage 16 sind Unterschiede zu vermerken. Die Frontanlage 12 umfasst eine Luftheizung 672, der Luft von dem Gebläse 652 vorzugsweise unter Umgehung des Verdampfers 632 zugeführt wird. Eine solche Luftheizung kann beispielsweise als herkömmliche brennstoffbetriebene Luftzusatzheizung ausgebildet sein. Die Kombination aus Heckanlage 14 und Standanlage 16 umfasst eine elektrische Heizung 674. Dieser wird elektrische Energie aus einer Fahrzeugbatterie, insbesondere einer Zusatzbatterie, einer Brennstoffzelle oder einem Generator zugeführt. Auch die elektrische Heizung 674 wird vorzugsweise unter Umgehung des Verdampfers 624 durch das Gebläse 626 mit einem Luftstrom beaufschlagt.

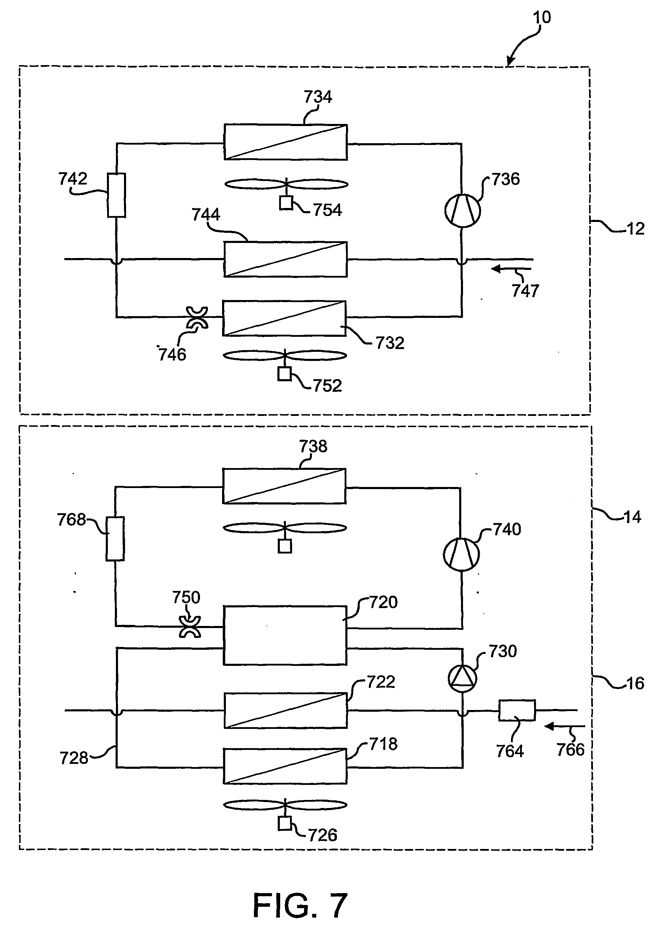

Figur 7 zeigt eine schematische Darstellung einer sechsten Ausführungsform eines erfindungsgemäßen Heiz- und Klimatisierungssystems. Es ist wiederum ein Beispiel dargestellt, bei dem die Frontanlage 12 einerseits und die Kombination aus Heckanlage 14 und Standanlage 16 andererseits vollständig voneinander entkoppelt sind. Die Frontanlage 12 ist in herkömmlicher Weise aufgebaut. Der Kombination aus Heckanlage 14 und Standanlage 16 fehlt im Gegensatz zu der Ausführungsform gemäß Figur 4 ein separater Verdampfer. Vielmehr ist nur der Kältespeicher 720 als Verdampfer des Kältekreises vorgesehen. Mithin wird auch im Fahrbetrieb, wenn eine Kühlung des Heckbereichs des Fahrzeugs erwünscht ist, die für die Kühlung erforderliche Kälte über den Kühlwärmetauscher 718 aus dem Kältespeicher 720 mittels der Pumpe 730 über den Wärmeträgerkreislauf 728 entnommen.

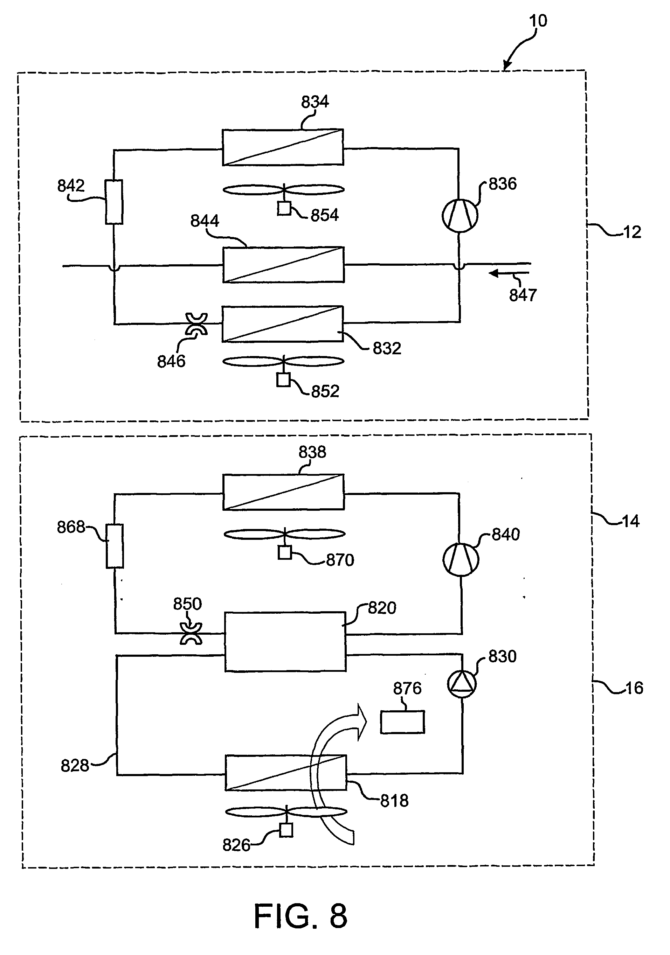

Figur 8 zeigt eine schematische Darstellung einer siebten Ausführungsform eines erfindungsgemäßen Heiz- und Klimatisierungssystems. Diese entspricht in weiten Teilen der Ausführungsform gemäß Figur 7. Unterschiede bestehen im Hinblick auf die Heizung in der Kombination aus Heckanlage und Standanlage. Im vorliegenden Beispiel ist eine Luftheizung 876 vorgesehen, der von dem Gebläse 826 Luft vorzugsweise unter Umgehung des Kühlwärmetauschers 818 zugeführt wird. Eine solche Luftheizung kann beispielsweise als herkömmliche brennstoffbetriebene Luftzusatzheizung ausgebildet sein.

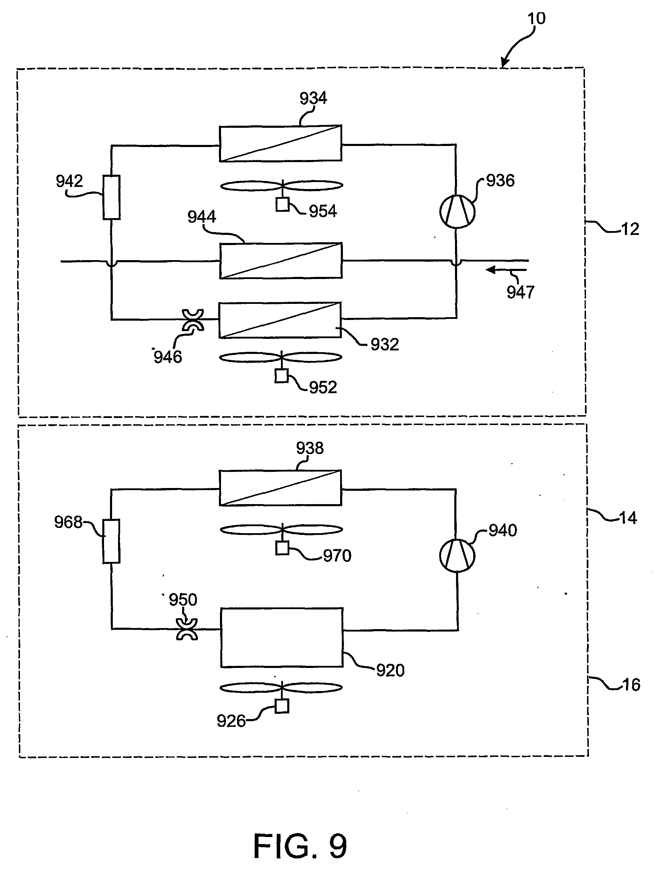

Figur 9 zeigt eine schematische Darstellung einer achten Ausführungsform eines erfindungsgemäßen Heiz- und Klimatisierungssystems. Die hier dargestellte Ausführungsform des erfindungsgemäßen Heiz- und Klimatisierungssystems 10 entspricht in weiten Teilen der Ausführungsform gemäß Figur 8. In der Kombination aus Heckanlage 14 und Standanlage 16 wird allerdings auf einen separaten Kühlwärmetauscher verzichtet. Vielmehr ist der Kältespeicher als Speicher-Verdampfer-Wärmetauscher-Einheit 920 ausgelegt, die direkt mit Luft von dem Gebläse 926 zur Übertragung von Kälte in dem Fahrzeuginnenraum beaufschlagt werden kann. Eine (nicht dargestellte) Heizeinrichtung kann ebenfalls vorgesehen sein, beispielsweise durch einen von Kühlwasser durchströmten Heizwärmetauscher, wie beispielsweise im Zusammenhang mit Figur 7 beschrieben, eine Luftzusatzheizung, wie beispielsweise im Zusammenhang mit Figur 8 beschrieben oder auch eine elektrische Heizung, wie beispielsweise im Zusammenhang mit Figur 6 beschrieben.

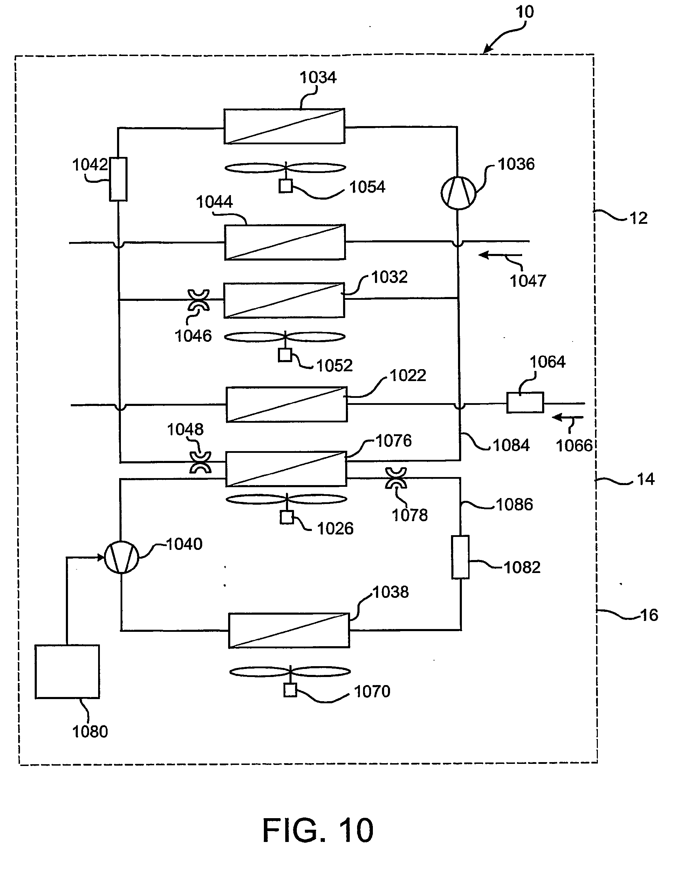

Figur 10 zeigt eine schematische Darstellung einer neunten Ausführungsform eines erfindungsgemäßen Heiz- und Klimatisierungssystems. Hier sind zwei getrennte Kältekreise 1084 und 1086 vorgesehen. Beide Kältekreise 1084 und 1086 stehen mit demselben Verdampfer 1076 in Verbindung, wobei keine Vermischung der den Verdampfer 1076 getrennt durchströmenden Medien in dem Verdampfer 1076 erfolgt. Der Kältekreis 1086 umfasst einen Kompressor 1040, der durch einen Zusatzmotor 1080 oder eine Zusatzbatterie 1080 antreibbar ist. Der Antrieb durch den Zusatzmotor kann, wie auch bei in anderen Ausführungsformen der vorliegenden Erfindung, direkt mechanisch erfolgen oder dadurch, dass der Zusatzmotor den Kompressor 1040 direkt über einen Generator beziehungsweise unter weiterer Zwischenschaltung einer von dem Generator geladenen Batterie antreibt. Der zweite Kältekreis 1086 ist ansonsten in dem Sinne vollständig, dass er einen eigenen Kondensator 1038, einen eigenen Sammler 1082 und ein eigenes Expansionsorgan 1078 aufweist. Während der Fahrt des Fahrzeugs ist im allgemeinen der Kompressor 1036 in Betrieb, während der Kompressor 1040 nicht in Betrieb ist. Im Stand des Kraftfahrzeugs erfolgt eine Standklimatisierung dadurch, dass der Kompressor 1040 betrieben wird.

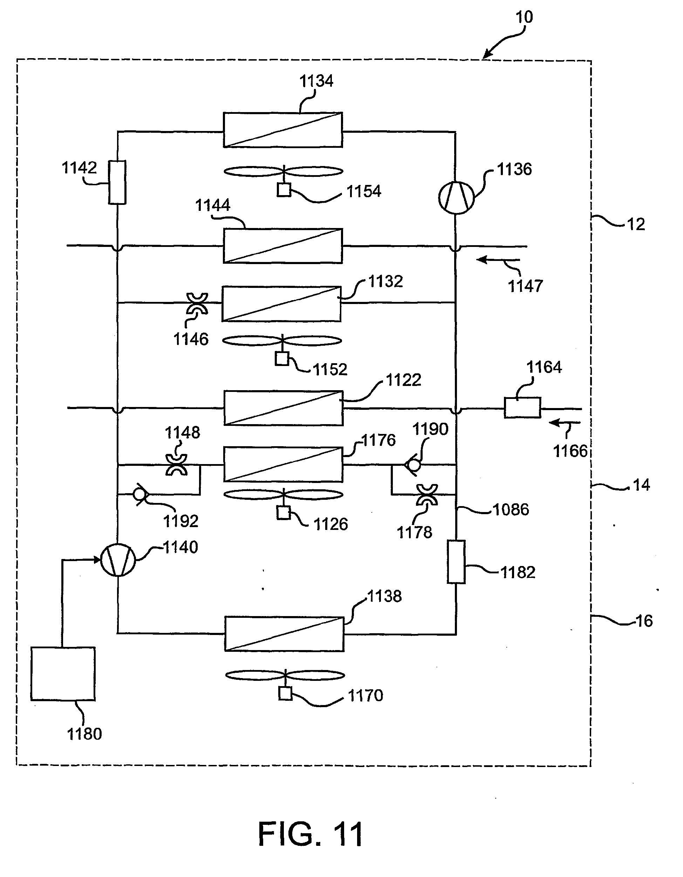

Figur 11 zeigt eine schematische Darstellung einer zehnten Ausführungsform eines erfindungsgemäßen Heiz- und Klimatisierungssystems. Diese entspricht in weiten Teilen der Ausführungsform gemäß Figur 10. Im Unterschied zu Figur 10 sind keine vollständig getrennten Kältekreise vorgesehen. Der ordnungsgemäße Betrieb des Systems, sowohl bei laufendem Kompressor 1136 als auch bei laufendem Kompressor 1140 wird durch die Anordnung von Rückschlagventilen 1188, 1190, 1192 sichergestellt. Beim Betrieb des Kompressors 1136 und Stillstand des Kompressors 1140 sorgt das Rückschlagventil 1192 dafür, dass keine Strömung von Kältemittel über die das Expansionsorgan 1148 umgehende Leitung erfolgt, sondern dass die gesamte Strömung durch das Expansionsorgan 1148 erfolgt. Der Kompressor 1140 verhindert ein Überströmen von Kältemittel in Richtung auf den Kondensator 1138. Bei Stillstand des Kompressors 1136 und Betrieb des Kompressors 1140 sorgt das Rückschlagventil 1190 dafür, dass das Expansionsorgan 1178 in Richtung auf den Verdampfer 1176 durchströmt wird. Das Rückschlagventil 1188 sorgt dafür, dass keine Strömung durch den Verdampfer 1132 erfolgt. Der Kompressor 1136 ist dafür verantwortlich, dass kein unerwünschtes Überströmen von Kältemittel in Richtung auf den Kondensator 1134 stattfindet.

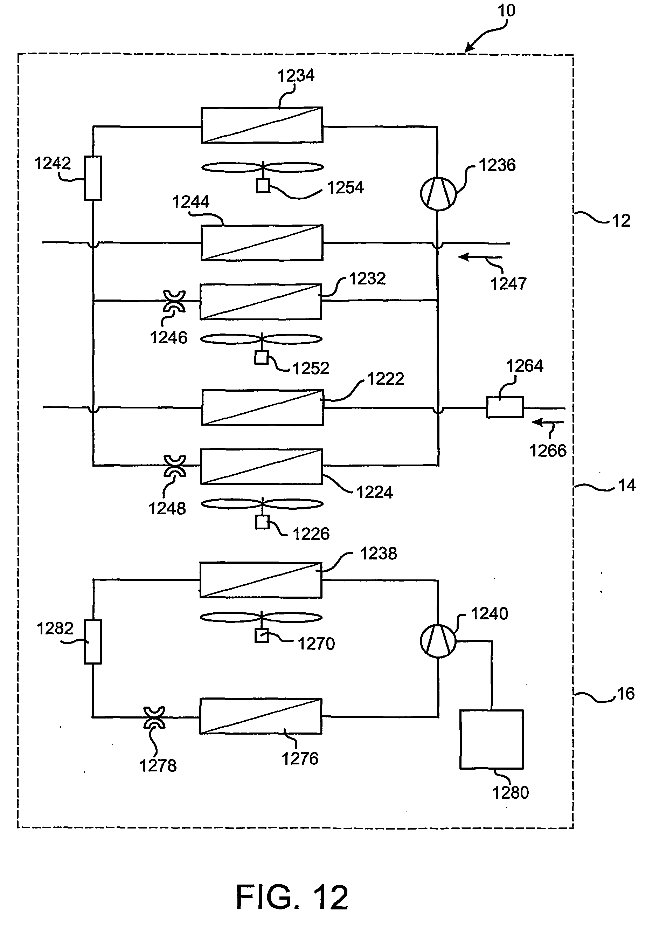

Figur 12 zeigt eine schematische Darstellung einer elften Ausführungsform eines erfindungsgemäßen Heiz- und Klimatisierungssystems. Diese entspricht wiederum in weiten Teilen der Ausführungsform gemäß Figur 10. Im Unterschied zu Figur 10 sind aber für den Fahrbetrieb und den Standbetrieb separate Verdampfer vorgesehen, nämlich der Verdampfer 1224 für den Fahrbetrieb und der Verdampfer 1226 für den Standbetrieb. Eine Integration der Standanlage 16 in die Heckanlage 14 äußert sich insbesondere wieder darin, dass der Heizwärmetauscher 1222 der Heckanlage 14, der Verdampfer 1224 der Heckanlage 14 und der Verdampfer 1270 der Standanlage 16 durch dasselbe Gebläse 1226 mit einem Luftstrom beaufschlagt werden, also beispielsweise eine Anordnung aufweisen, wie es im Zusammenhang mit Figur 2 gezeigt und schon mehrfach erläutert wurde. Der Kühlwärmetauscher 18 gemäß Figur 2 ist dann lediglich durch den Verdampfer 1276 gemäß Figur 12 zu ersetzen.

### Bezugszeichenliste

- 10: Klimatisierungssystem
- 12: Frontanlage
- 14: Heckanlage
- 16: Standanlage
- 18: Kühlwärmetauscher
- 20: Kältespeicher
- 20: Speicher-Verdampfer-Wärmetauscher-Einheit
- 22: Heizwärmetauscher
- 24: Verdampfer
- 26: Gebläse
- 28: Wärmeträgerkreislauf
- 30: Pumpe
- 32: Verdampfer
- 34: Kondensator
- 36: Kompressor
- 38: Kondensator
- 40: Kompressor
- 42: Sammler
- 44: Heizwärmetauscher
- 46: Expansionsorgan
- 47: Kühlwasser
- 48: Expansionsorgan
- 50: Expansionsorgan
- 52: Gebläse
- 54: Gebläse
- 56: Magnetventil
- 58: Magnetventil
- 60: Magnetventil
- 62: Rückschlagventil
- 64: Wasserheizung
- 66: Kühlwasser
- 70: Gebläse
- 72: Luftheizung
- 74: Heizung
- 76: Verdampfer
- 78: Expansionsorgan
- 80: Zusatzmotor / Zusatzbatterie
- 82: Sammler
- 84: Kältekreis
- 86: Kältekreis
- 88: Rückschlagventil
- 90: Rückschlagventil
- 92: Rückschlagventil

Um ganzzahlige Vielfache von Hundert vermehrte Bezugszeichen bezeichnen gleiche oder vergleichbare Komponenten.

## Patentansprüche

1. Heiz- und Klimatisierungssystem (10) für ein Kraftfahrzeug, insbesondere ein Nutzkraftfahrzeug, zum Heizen und Kühlen eines Kraftfahrzeuginnenraums während der Fahrt und im Stand des Kraftfahrzeugs, wobei der Kraftfahrzeuginnenraum in einen Frontbereich und einen Heckbereich unterteilt ist, die separat heizbar und kühlbar sind, mit
- einer Frontanlage (12) zum Heizen und Kühlen des Frontbereiches während der Fahrt des Kraftfahrzeugs,
- einer Heckanlage (14) zum Heizen und Kühlen des Heckbereichs während der Fahrt des Kraftfahrzeugs und
- einer Standanlage (16), um mit dieser zumindest den Heckbereich im Stand des Kraftfahrzeugs zu Heizen und zu Kühlen,
**dadurch gekennzeichnet, dass** die Standanlage (16) in die Heckanlage (14) integriert ist.

2. Heiz- und Klimatisierungssystem nach Anspruch 1, **dadurch gekennzeichnet,**
- **dass** die Standanlage (16) einen Kühlwärmetauscher (18) und einen Kältespeicher (20) aufweist und
- **dass** der Kühlwärmetauscher (18), ein Heizwärmetauscher (22) der Heckanlage (14) und ein Verdampfer (24) der Heckanlage von demselben Gebläse (26) mit einem Luftstrom beaufschlagbar sind.

3. Heiz- und Klimatisierungssystem nach Anspruch 2, **dadurch gekennzeichnet, dass** der Kühlwärmetauscher (18) der Standanlage (16) und der Kältespeicher (20) der Standanlage in einem Wärmeträgerkreislauf (28) angeordnet sind, durch den ein Wärmeträger mittels einer Pumpe (30) gefördert wird.

4. Heiz- und Klimatisierungssystem nach einem der vorangehenden Ansprüche, **dadurch gekennzeichnet,**
- **dass** ein Verdampfer (32) der Frontanlage (12), ein Verdampfer (24) der Heckanlage (14) und ein Kältespeicher (20) der Standanlage (16) mit demselben Kondensator (34) kommunizieren und
- **dass** ein Kompressor (36) für das gesamte Heiz- und Klimatisierungssystem vorgesehen ist.

5. Heiz- und Klimatisierungssystem nach einem der Ansprüche 1 bis 3, **dadurch gekennzeichnet,**
- **dass** ein Verdampfer (332) der Frontanlage (12) und ein Verdampfer (334) der Heckanlage (14) mit demselben Kondensator (334) kommunizieren und
- **dass** die Standanlage (16) einen eigenen Kondensator (338) und einen eigenen Kompressor (340) aufweist.

6. Heiz- und Klimatisierungssystem nach einem der Ansprüche 1 bis 3, **dadurch gekennzeichnet,**
- **dass** ein Verdampfer (424) der Heckanlage (14) und ein Kältespeicher (420) der Standanlage (16) mit demselben Kondensator (428) kommunizieren und
- **dass** die Frontanlage (12) einen eigenen Kondensator (434) und einen eigenen Kompressor (436) aufweist.

7. Heiz- und Klimatisierungssystem nach Anspruch 1, **dadurch gekennzeichnet, dass** die Heckanlage und die Standanlage einen gemeinsamen im Stand betreibbaren Kompressor (540, 640) aufweisen.

8. Heiz- und Klimatisierungssystem nach Anspruch 1, **dadurch gekennzeichnet,**
- **dass** die Standanlage einen Kältespeicher (720, 820) aufweist und
- **dass** die Standanlage und die Heckanlage einen gemeinsamen Kühlwärmetauscher (718, 818) aufweisen, der mit dem Kältespeicher (720, 820) über eine Pumpe (730, 830) kommuniziert.

9. Heiz- und Klimatisierungssystem nach Anspruch 1, **dadurch gekennzeichnet, dass** die Standanlage (16) und die Heckanlage (14) eine gemeinsame Speicher-Verdampfer-Wärmetauscher-Einheit (920) aufweisen.

10. Verfahren zum Heizen und Klimatisieren eines Kraftfahrzeugs mit einem Heiz- und Klimatisierungssystem (10) nach einem der vorangehenden Ansprüche.

11. Kraftfahrzeug mit einem Heiz- und Klimatisierungssystem (10) nach einem der Ansprüche 1 bis 9.

## Claims

1. A heating and air-conditioning system (10) for a motor vehicle, in particular a utility vehicle, in order to heat and cool the inside of a motor vehicle during a running-state and a stop-state of the motor vehicle, wherein the inside of the motor vehicle is divided into a front region and a rear region, which can be heated and cooled separately, comprising:
- a front system (12) for heating and cooling the front region during the running-state of the motor vehicle,
- a rear system (14) for heating and cooling the rear region during the running-state of the motor vehicle, and
- a stop-state system (16) for heating and cooling at least the rear region when the motor vehicle is in the stop-state,
**characterized in that** the stop-state system (16) is integrated into the rear system (14).

2. The heating and air-conditioning system according to claim 1, **characterized in that**
- the stop-state system (16) comprises a cooling heat exchanger (18) and a cold accumulator (20), and
- the cooling heat exchanger (18), a heating heat exchanger (22) of the rear system (14) and an evaporator (24) of the rear system are supplied with an air flow by the same blower (26).

3. The heating and air-conditioning system according to claim 2, **characterized in that** the cooling heat exchanger (18) of the stop-state system (16) and the cold accumulator (20) of the stop-state system are arranged in a heat carrier circuit (28), through which a heat carrier is conveyed by a pump (30).

4. The heating and air-conditioning system according to one of the preceeding claims, **characterized in that**
- an evaporator (32) of the front system (12), an evaporator (24) of the rear system (14) and a cold accumulator (20) of the stop-state system (16) communicate with the same condenser (34), and
- a compressor (36) is provided for the entire heating and air-conditioning system.

5. The heating and air-conditioning system according to one of claims 1 to 3, **characterized in that**
- an evaporator (332) of the front system (12) and an evaporator (324) of the rear system (14) communicate with the same condenser (334), and
- the stop-state system (16) comprises an own condenser (338) and an own compressor (340).

6. The heating and air-conditioning system according to one of claims 1 to 3, **characterized in that**
- an evaporator (424) of the rear system (14) and a cold accumulator (420) of the stop-state system (16) communicate with the same condenser (428) and
- the front system (12) comprises an own condenser (434) and an own compressor (436).

7. The heating and air-conditioning system according to claim 1, **characterized in that** the rear system and the stop-state system comprise a common compressor (540, 640) which is operable in the stop-state.

8. The heating and air-conditioning system according to claim 1, **characterized in that**
- the stop-state system comprises a cold accumulator (720, 820), and
- the stop-state system and the rear system comprise a common cooling heat exchanger (718, 818) which is communicating with the cold accumulator (720, 820) via a pump (730, 830).

9. The heating and air-conditioning system according to claim 1, **characterized in that** the stop-state system (16) and the rear system (14) comprise a common accumulator-evaporator-heat-exchanger-unit (920).

10. Method for heating and air-conditioning of a motor vehicle comprising a heating and air-conditioning system (10) according to one of the preceeding claims.

11. Motor vehicle comprising a heating and air-conditioning system (10) according to one of the claims 1 to 9.

## Revendications

1. Système de chauffage et de climatisation (10) destiné à un véhicule automobile, notamment un véhicule utilitaire, pour chauffer et refroidir un intérieur du véhicule pendant la marche et pendant l'arrêt du véhicule, l'intérieur du véhicule étant divisé en une partie avant et une partie arrière chauffables et refroidissables séparément, le système comportant
- un système avant (12) pour chauffer et refroidir la partie avant pendant la marche du véhicule,
- un système arrière (14) pour chauffer et refroidir la partie arrière pendant la marche du véhicule et
- un système auxiliaire (16) pour chauffer et refroidir au moins la partie arrière pendant l'arrêt du véhicule,
**caractérisé en ce que** le système auxiliaire (16) est intégré dans le système arrière (14).

2. Système de chauffage et de climatisation selon la revendication 1, **caractérisé en ce que**
- le système auxiliaire (16) comporte un échangeur de chaleur pour refroidir (18) et un accumulateur de froid (20) et
- l'échangeur de chaleur pour refroidir (18), un échangeur de chaleur pour chauffer (22) du système arrière (14) et un évaporateur (24) du système arrière sont alimentables d'un écoulement d'air par le même souffleur (26).

3. Système de chauffage et de climatisation selon la revendication 2, **caractérisé en ce que** l'échangeur de chaleur pour refroidir (18) du système auxiliaire (16) et l'accumulateur de froid (20) du système auxiliaire sont agencés dans un circuit caloporteur (28) par lequel un fluide caloporteur est transporté par une pompe (30).

4. Système de chauffage et de climatisation selon l'une des revendications précédentes, **caractérisé en ce que**
- un évaporateur (32) du système avant (12), un évaporateur (24) du système arrière (14) et un accumulateur de froid (20) du système auxiliaire (16) communiquent avec le même condenseur (34) et
- un compresseur (36) est prévu pour le système de chauffage et de climatisation entier.

5. Système de chauffage et de climatisation selon l'une des revendications 1 à 3, **caractérisé en ce que**
- un évaporateur (332) du système avant (12) et un évaporateur (324) du système arrière (14) communiquent avec le même condenseur (334) et
- le système auxiliaire (16) comporte son propre condenseur (338) et son propre compresseur (340).

6. Système de chauffage et de climatisation selon l'une des revendications 1 à 3, **caractérisé en ce que**
- un évaporateur (424) du système arrière (14) et un accumulateur de froid (420) du système auxiliaire (16) communiquent avec le même condenseur (428) et
- le système avant (12) comporte son propre condenseur (434) et son propre compresseur (436).

7. Système de chauffage et de climatisation selon la revendication 1, **caractérisé en ce que** le système arrière et le système auxiliaire comportent un compresseur commun (540, 640) utilisable pendant l'arrêt du véhicule.

8. Système de chauffage et de climatisation selon la revendication 1, **caractérisé en ce que**
- le système auxiliaire comporte un accumulateur de froid (720, 820) et
- le système auxiliaire et le système arrière comportent un échangeur de chaleur pour refroidir commun (718, 818) communiquant avec l'accumulateur de froid (720, 820) à travers une pompe (730, 830).

9. Système de chauffage et de climatisation selon la revendication 1, **caractérisé en ce que** le système auxiliaire (16) et le système arrière (14) comportent une unité accumulateur évaporateur échangeur-de-chaleur commune (920).

10. Méthode pour chauffer et pour climatiser un véhicule automobile comportant un système de chauffage et de climatisation (10) selon l'une des revendications précédentes.

11. Véhicule automobile comportant un système de chauffage et de climatisation (10) selon l'une de revendications 1 à 9.
